# EUROPÄISCHE PATENTSCHRIFT

(11) **EP 4 428 500 B1**
(45) Veröffentlichungstag und Bekanntmachung des Hinweises auf die Patenterteilung: **01.10.2025**
(21) Anmeldenummer: 24153106.0
(22) Anmeldetag: 22.01.2024
(51) Int. Cl.: G01F 1/60, G01F 1/74, G01F 15/075

(54) **VERFAHREN ZUM BETREIBEN EINES MAGNETISCH-INDUKTIVEN DURCHFLUSSMESSGERÄTS UND MAGNETISCH-INDUKTIVES DURCHFLUSSMESSGERÄT**
METHOD FOR OPERATING A MAGNETIC-INDUCTIVE FLOW METER AND MAGNETIC-INDUCTIVE FLOW METER
PROCÉDÉ DE FONCTIONNEMENT D'UN DÉBITMÈTRE À INDUCTION MAGNÉTIQUE ET DÉBITMÈTRE À INDUCTION MAGNÉTIQUE

(30) Priorität: 07.03.2023 DE 102023105640
(43) Veröffentlichungstag der Anmeldung: 11.09.2024
(73) Patentinhaber: KROHNE Messtechnik GmbH, 47058 Duisburg (DE)
(72) Erfinder: Förster, Herr Jan, 45149 Essen (DE); Fritsch, Thomas, 41363 Jüchen (DE); Paul, Wacker, 47059 Duisburg (DE)
(74) Vertreter: Gesthuysen Patentanwälte

(56) Entgegenhaltungen:
- WO-A1-2014/209990
- WO-A1-2015/069249
- CN-A- 109 781 195
- US-A- 4 402 230
- US-A1- 2003 029 249

## Beschreibung

Die Erfindung geht aus von einem Verfahren zum Betreiben eines Magnetisch-induktiven Durchflussmessgeräts, wobei das Magnetisch-induktive Durchflussmessgerät wenigstens ein Messrohr zum Führen eines strömenden Mediums, wenigstens eine Magnetfelderzeugungseinrichtung zum Erzeugen eines das Messrohr senkrecht zur Strömungsrichtung des Mediums durchsetzenden Magnetfeldes, wenigstens ein Elektrodenpaar zum Abgreifen einer in dem Medium im Messrohr induzierten elektrischen Spannung, und wenigstens eine Steuer- und Auswerteeinheit umfasst.

Im Detail betrifft die Erfindung die Erfassung einer Zwei-Phasen-Strömung eines strömenden Mediums.

Darüber hinaus betrifft die Erfindung ein Magnetisch-Induktives-Durchflussmessgerät, wobei das Magnetisch-induktive Durchflussmessgerät wenigstens ein Messrohr zum Führen eines strömenden Mediums, wenigstens eine Magnetfelderzeugungseinrichtung zum Erzeugen eines das Messrohr senkrecht zur Strömungsrichtung des Mediums durchsetzenden Magnetfeldes, wenigstens ein Elektrodenpaar zum Abgreifen einer in dem Medium im Messrohr induzierten elektrischen Spannung, und wenigstens eine Steuer- und Auswerteeinheit umfasst.

Mit Hilfe von Magnetisch-induktiven Durchflussmessgeräten (MID) wird der Durchfluss von Flüssigkeiten in einer Rohrleitung bestimmt. Bei diesem Messprinzip wird ein magnetisches Feld senkrecht zur Flussrichtung des Mediums im Messrohr aufgespannt und Ladungsträger im das MID durchströmenden Medium durch Wirkung der Lorenz-Kraft senkrecht zur Strömungsrichtung und senkrecht zum Magnetfeld abgelenkt. Dadurch entsteht eine zur Strömungsgeschwindigkeit proportionale elektrische Spannung, die mit Hilfe von zwei Messelektroden abgegriffen werden kann.

Im Allgemeinen wird für das Funktionieren dieses Messprinzips vorausgesetzt, dass das das MID durchströmende Medium elektrisch leitfähig ist. Kommen nun im Medium auch elektrisch nicht-leitfähige oder elektrisch gering leitfähige Anteile vor, führen diese Anteile zu einer Veränderung der elektrischen Spannung zwischen den Messelektroden und somit zu einer Veränderung des Messwerts des MID. Solche nicht- bzw. gering-leitfähigen Anteile im Medium können beispielsweise durch Gaseinschlüsse im flüssigen Medium entstehen. Ein anderes Beispiel für das Vorhandensein von nicht-leitenden Anteilen im Medium ist ein Wasser-Öl-Gemisch.

Eine solche Mischung aus elektrisch leitenden und elektrisch nicht-leitenden Anteilen im Medium wird üblicherweise als Zwei-Phasen-Strömung bezeichnet, wobei die zwei Phasen für das Messprinzip verschiedene Einflüsse darstellen. Dabei wird die erste Phase durch die elektrisch leitfähigen Anteile im Medium gebildet und die zweite Phase wird durch die elektrisch nicht-leitfähigen Anteile gebildet.

Die nicht-leitfähigen Anteile im Medium tragen nicht zur elektrischen Spannung zwischen den Messelektroden bei, da in diesen Bereichen keine freien Ladungsträger durch die Lorenz-Kraft verschoben werden können.

Die gemessene elektrische Spannung zwischen den Messelektroden verändert sich daher durch das Vorhandensein einer Zwei-Phasen-Strömung.

Aus dem Stand der Technik ist es bekannt, durch Betrachtung der zeitlichen Variation der Elektrodenspannung das Vorhandensein einer Zwei-Phasen-Strömung zu erkennen.

Allerdings kann diese Methode nicht gegenüber anderen Einflüssen auf die Standardabweichung differenzieren. Sofern andere Störungen, wie z. B. Turbulenzen durch ungünstige Rohr-Geometrien oder ungünstige Ventilstellungen ebenfalls zu einer erhöhten Standardabweichung führen, wird diese Methode als Fehler immer auch eine Zwei-Phasen-Strömung hinweisen, auch wenn diese ggfs. gar nicht vorliegt und die Ursache anderswo zu suchen ist.

Aus dem Dokument EP 2 130 002 B1 ist ein Verfahren zum Betreiben eines Magnetisch-induktiven Durchflussmessgeräts bekannt, wobei die Signale der Messelektroden des MID aus dem Zeitbereich in den Frequenzbereich transformiert werden. Die Ermittlung des Strömungstyps erfolgt unter Berücksichtigung des Rauschspektrums, beispielsweise durch Bestimmung der spektralen Leistungsdichte oder durch einen Vergleich mit einer Referenzfrequenz.

Zudem offenbart die Druckschrift WO 2020/050892 A1 ebenfalls ein Verfahren zum Betreiben eines Magnetisch-induktiven Durchflussmessgeräts, wobei anhand des Rauschpegels bestimmt wird, ob das zu untersuchende Medium eine Verunreinigung aufweist. US2003029249-Al offenbart ein Verfahren zur Durchflussmessung unter Verwendung eines elektromagnetischen Durchflussmessers mit einem Anregungssignal, das eine erste, relativ niederfrequente Komponente und eine zweite, relativ hochfrequente Komponente umfasst, wobei ein induziertes Elektrodensignal in eine erste Durchflussmesskomponente, die von der ersten Anregungskomponente erzeugt wird, und eine zweite Durchflussmesskomponente, die von der zweiten Anregungskomponente erzeugt wird, analysiert wird, wobei die erste Durchflussmesskomponente und die zweite Durchflussmesskomponente kombiniert werden, um eine Durchflussmessung basierend auf der ersten und der zweiten Durchflussmesskomponente zu erhalten, wobei die erste Durchflussmesskomponente tiefpassgefiltert wird, um hochfrequentes Rauschen zu entfernen, und die zweite Durchflussmesskomponente hochpassgefiltert wird, um niederfrequentes Rauschen zu entfernen.

Im Detail wird im Zeitbereich der Gleichanteil subtrahiert, die Signale dann hochpass-gefiltert und dann analysiert. Die Analyse basiert dabei zunächst auf der Bestimmung der Standardabweichung dieser gefilterten Signale sowie der Bestimmung des Abstands der maximalen und minimalen Werte dieser gefilterten Signale. Anschließend werden die so ermittelten Werte durch Median- und Tiefpass-Filterung geglättet und auf Überschreitung eines Grenzwerts überprüft. Bei Überschreitung des Grenzwerts liegt Zwei-Phasen-Strömung vor.

Ausgehend von dem dargelegten Stand der Technik ist es Aufgabe der vorliegenden Erfindung, ein Verfahren zum Betreiben eines Magnetisch-induktiven Durchflussmessgeräts anzugeben, das ein sicheres Erkennen einer Zwei-Phasen-Strömung gewährleistet. Des Weiteren ist es Aufgabe der Erfindung, ein entsprechendes Magnetisch-induktives Durchflussmessgerät anzugeben.

Gemäß einer ersten Lehre der vorliegenden Erfindung wird die zuvor genannte Aufgabe durch ein eingangs dargelegtes Verfahren dadurch gelöst,
dass in einem Aufzeichnungsschritt die Steuer- und Auswerteeinheit das Elektrodensignal der Elektrodenspannung während einer Magnetfeldausrichtung als Messdaten aufzeichnet,
dass die Messdaten in einem ersten Filterschritt durch einen Tiefpass gefiltert werden, sodass ein erstes tiefpassgefiltertes Auswertesignal vorliegt, wobei aus dem tiefpassgefilterten Auswertesignal ein erster Strömungsparameter bestimmt wird, der mit einem ersten, in der Steuer- und Auswerteeinheit hinterlegten, Grenzwert verglichen wird, und
dass die Messdaten in einem zweiten Filterschritt durch einen Hochpass gefiltert werden, sodass ein hochpassgefiltertes Auswertesignal vorliegt, wobei aus dem hochpassgefilterten Auswertesignal ein zweiter Strömungsparameter bestimmt wird, der mit einem zweiten, in der Steuer- und Auswerteeinheit hinterlegten, Grenzwert verglichen wird,
so dass das tiefpassgefilterte Auswertesignal und das hochpassgefilterte Auswertesignal separat derselben Auswertung unterzogen werden, und
dass in einem Zuordnungsschritt dem strömenden Medium eine Zwei-Phasen-Strömung zugeordnet wird, wenn der erste Strömungsparameter den ersten Grenzwert überschreitet und/oder wenn der zweite Strömungsparameter den zweiten Grenzwert überschreitet.

Erfindungsgemäß wurde erkannt, dass bei dem Vorliegen einer Zwei-Phasen-strömung sich Änderungen des Elektrodensignals sowohl im hochfrequenten Bereich als auch im niederfrequenten Bereich ergeben.

Dabei liegen Änderungen des hochfrequenten Bereichs im Wesentlichen bei höheren Durchflussgeschwindigkeiten vor und bei niedrigeren Strömungsgeschwindigkeiten dominieren Änderungen des Elektrodensignals bei niedrigen Frequenzen.

Dadurch, dass die Messdaten einerseits durch einen Hochpass gefiltert werden und andererseits durch einen Tiefpass gefiltert werden, werden die Änderungen in beiden Frequenzbereichen separat bestimmt und beurteilt.

Wenn es heißt, dass das tiefpassgefilterte Auswertesignal und das hochpassgefilterte Auswertesignal separat derselben Auswertung unterzogen werden, so ist damit gemeint, dass die Auswertesignale den gleichen Analyseschritten unterzogen werden. Dabei können sich einzelne Werte, beispielsiweise der erste Grenzwert und der zweite Grenzwert, durchaus unterscheiden.

Damit weist das Verfahren den Vorteil auf, dass das Vorliegen einer Zwei-Phasen-Strömung sowohl bei hohen Durchflussgeschwindigkeiten als auch bei niedrigen Durchflussgeschwindigkeiten besonders genau bestimmt werden kann.

Weiterhin weist das Verfahren den Vorteil auf, dass die komplette Auswertung der Messdaten im Zeitbereich erfolgen kann, sodass eine rechenaufwendige Transformation der Messdaten in den Frequenzbereich entfallen kann.

Der in der Steuer- und Auswerteeinheit jeweils hinterlegte Grenzwert grenzt den Bereich der Ein-Phasen-Strömung von dem Bereich der Zwei-Phasen-Strömung ab. Wenn es heißt, dass ein Strömungsparameter mit einem Grenzwert dahingehend verglichen wird, ob der Strömungsparameter den Grenzwert überschreitet, so ist damit gemeint, dass der Strömungsparameter bei Vorliegen einer Zwei-Phasen-Strömung im Wertebereich der Zwei-Phasen-Strömung liegt. Anders gesagt wird überprüft, ob ein oberer Grenzwert überschritten wird oder ein unterer Grenzwert unterschritten wird.

Gemäß einer besonders bevorzugten Ausgestaltung wird als erster Strömungsparameter die Varianz des tiefpassgefilterten Auswertesignals bestimmt, sodass eine Tiefpass-Varianz vorliegt, und als zweiter Strömungsparameter wird die Varianz des hochpassgefilterten Auswertesignals bestimmt, sodass eine Hochpass-Varianz vorliegt. Gemäß dieser Ausgestaltung sind in der Steuer- und Auswerteeinheit ein Tiefpass-Varianz-Grenzwert und ein Hochpass-Varianz-Grenzwert hinterlegt, wobei die Tiefpass-Varianz mit dem Tiefpass-Varianz-Grenzwert verglichen wird und wobei die Hochpass-Varianz mit dem Hochpass-Varianz-Grenzwert verglichen wird. Eine Zwei-Phasen-Strömung wird dem Medium zugeordnet, wenn die Tiefpass-Varianz den Tiefpass-Varianz-Grenzwert überschreitet und/oder wenn die Hochpass-Varianz den Hochpass-Varianz-Grenzwert überschreitet.

Diese Ausgestaltung des Verfahrens berücksichtigt, dass in niedrigen Frequenzbereichen und/oder in hohen Frequenzbereichen der Messdaten im Vergleich zu den Messdaten einer Ein-Phasen-Strömung andere Frequenzen und/oder Frequenzen mit höherer Amplitude enthalten sind, sodass sich die Varianz des betrachteten Frequenzbereichs erhöht. Wie oben dargelegt gilt dies sowohl für den Bereich niedriger Frequenzen als auch für den Bereich hoher Frequenzen.

Gemäß einer Ausgestaltung des Verfahrens weisen der Tiefpass-Varianz-Grenzwert und der Hochpass-Varianz-Grenzwert dieselben Werte auf. Hierzu sind die Werte für die Hochpass-Varianz und die Werte für die Tiefpass-Varianz normiert. Diese Ausgestaltung weist den Vorteil auf, dass derselbe Grenzwert für die Hochpass-Varianz und die Tiefpass-Varianz für unterschiedliche Ausgestaltungen von Durchflussmessgeräten, beispielsweise mit unterschiedlichen Messrohrdurchmessern, gewählt werden kann. Alternativ unterscheiden sich der Tiefpass-Varianz-Grenzwert und der Hochpass-Varianz-Grenzwert.

Gemäß einer nächsten Ausgestaltung wird vor dem Vergleich mit dem ersten Grenzwert von dem tiefpassgefilterten Auswertesignal der Gleichanteil subtrahiert und es wird vor dem Vergleich mit dem zweiten Grenzwert von dem ersten hochpassgefilterten Auswertesignal der Gleichanteil subtrahiert.

Gemäß einer weiteren bevorzugten Ausgestaltung des Verfahrens wird während wenigstens einer weiteren Magnetfeldausrichtung wenigstens ein weiteres Elektrodensignal erfasst und aus dem wenigstens einen weiteren Elektrodensignal wird nach der Tiefpassfilterung wenigstens ein weiterer erster Strömungsparameter bestimmt und aus dem wenigstens einen weiteren Elektrodensignal wird nach der Hochpassfilterung wenigstens ein weiterer zweiter Strömungsparameter bestimmt. Die ersten Strömungsparameter werden gemittelt, sodass ein gemittelter erster Strömungsparameter vorliegt, und die zweiten Strömungsparameter werden gemittelt, sodass ein gemittelter zweiter Strömungsparameter vorliegt und zur Detektion einer Zwei-Phasen-Strömung wird der gemittelte erste Strömungsparameter mit dem ersten Grenzwert verglichen und der gemittelte zweite Strömungsparameter mit dem zweiten Grenzwert verglichen.

Gemäß einer alternativen Ausgestaltung wird während wenigstens einer weiteren Magnetfeldausrichtung wenigstens ein weiteres Elektrodensignal erfasst, sodass eine Mehrzahl an Messdaten vorliegt und die Mehrzahl an Messdaten wird gemittelt, sodass gemittelte Messdaten vorliegt. Anschließend werden die gemittelten Messdaten zur Bestimmung einer Zwei-Phasen-Strömung durch eine Hochpassfilterung und durch eine Tiefpassfilterung weiter ausgewertet.

Diese Ausgestaltungen des Verfahrens gewährleisten ein besseres Signal-zu-Rausch-Verhältnis, sodass ein Unterschied in der Varianz, also das Überschreiten eines Grenzwerts besonders genau bestimmt werden kann. Vorzugsweise werden die Messdaten von einer Folge von Magnetfeldausrichtungen verglichen, sodass insgesamt Messdaten für eine Dauer von ca. 5 s erfasst werden.

Gemäß einer weiteren bevorzugten Ausgestaltung liegt die Grenzfrequenz f_{tief} des Tiefpass-Filters zwischen 30 Hz und 500 Hz , wobei die Grenzfrequenz f_{tief} vorzugsweise ca. 100 Hz beträgt. Diese Ausgestaltung berücksichtigt, dass insbesondere bei langsamen Strömungsgeschwindigkeiten Änderungen der Varianz bei niedrigen Frequenzen unterhalb von 150 Hz oder unterhalb von 100 Hz oder unterhalb von 50 Hz vorliegen.

Bei Vorliegen einer Zwei-Phasen-Strömung können hohe Änderungen der Varianz in diesen Frequenzbereichen ebenfalls als Indikator für eine langsame Strömungsgeschwindigkeit verwendet werden.

Eine nächste Ausgestaltung des erfindungsgemäßen Verfahrens zeichnet sich dadurch aus, dass die Grenzfrequenz f_{hoch} des Hochpass-Filters zwischen 500 Hz und 1200 Hz liegt, wobei die Grenzfrequenz f_{hoch} vorzugsweise ca. 1000 Hz beträgt. Diese Ausgestaltung berücksichtigt, dass insbesondere bei hohen Strömungsgeschwindigkeiten Änderungen der Varianz bei hohen Frequenzen oberhalb von 900 Hz oder 1000 Hz oder 1100 Hz vorliegen.

Bei Vorliegen einer Zwei-Phasen-Strömung können hohe Änderungen der Varianz bei hohen Frequenzen ebenfalls als Indikator für hohe Strömungsgeschwindigkeiten verwendet werden.

Gemäß einer weiteren bevorzugten Ausgestaltung wird, sofern eine Zwei-Phasen-Strömung bestimmt wird, der nicht-leitfähige Anteil des strömenden Mediums basierend auf dem ersten Strömungsparameter oder dem gemittelten ersten Strömungsparameter und/oder basierend auf dem zweiten Strömungsparameter oder dem gemittelten zweiten Strömungsparameter bestimmt. Ist der Anteil der nicht-leitfähigen Phase bekannt, so kann der Volumendurchfluss der leitfähigen Phase unter Berücksichtigung des nicht-leitfähigen Anteils bestimmt werden.

Hierzu ist das Magnetisch-induktive Durchflussmessgerät kalibriert. Im Detail ist in der Steuer- und Auswerteeinheit ein Zusammenhang zwischen der Hochpass-Varianz und/oder der Tiefpass-Varianz und dem Anteil der nicht-leitenden Phase für unterschiedliche Durchflussgeschwindigkeiten hinterlegt. Somit kann bei bekannter Hochpass-Varianz und/oder bekannter Tiefpass-Varianz und bekannter Durchflussgeschwindigkeit der Anteil der nicht-leitenden Phase bestimmt werden. Werden sowohl die Hochpass-Varianz als auch die Tiefpass-Varianz bestimmt, dienen die mittels jeweils einer Varianz bestimmten Anteile der nicht-leitenden Phase gegenseitig als Kontrollwerte. Eine Abweichung des mittels der Hochpass-Varianz bestimmten Anteils der nicht-leitenden Phase von dem mittels der Tiefpass-Varianz bestimmten Anteil der nicht-leitenden Phase deutet auf einen Fehler in der Kalibrierung und/oder in der Bestimmung der Hochpass-Varianz und/oder der Tiefpass-Varianz hin.

Gemäß einer weiteren bevorzugten Ausgestaltung des Verfahrens ist in der Steuer- und Auswerteeinheit eine Abhängigkeit des ersten Strömungsparameters und/oder des zweiten Strömungsparameters von der Durchflussgeschwindigkeit hinterlegt und das Vorhandensein einer Zwei-Phasen-Strömung wird basierend auf dem Verlauf des ersten Strömungsparameters oder des gemittelten ersten Strömungsparameters bei verschiedenen Durchflussgeschwindigkeiten des strömenden Mediums und/oder basierend auf dem Verlauf des zweiten Strömungsparameters oder des gemittelten zweiten Strömungsparameters bei verschiedenen Durchflussgeschwindigkeiten des strömenden Mediums bestimmt.

Ist der Strömungsparameter die Varianz der Messdaten, so erhöht sich bei konstanter Zusammensetzung der Zwei-Phasenströmung die Hochpass-Varianz mit Zunahme der Strömungsgeschwindigkeit und die Tiefpass-Varianz wird mit zunehmender Strömungsgeschwindigkeit kleiner.

Gemäß einer Ausgestaltung des Verfahrens ist der Zusammenhang der Hochpass-Varianz und der Tiefpass-Varianz für unterschiedliche Anteile der nicht-leitenden Phase und Durchflussgeschwindigkeit in der Steuer-und Auswerteeinheit hinterlegt. Bei Kenntnis des Anteils der nicht-leitenden Phase und Bestimmung der Hochpass-Varianz und/oder der Tiefpass-Varianz kann die Strömungsgeschwindigkeit bestimmt werden. Beispielsweise kann die so bestimmte Strömungsgeschwindigkeit als Kontrollwert zu der mittels der Elektrodenspannung bestimmten Strömungsgeschwindigkeit verwendet werden.

Gemäß einer nächsten Ausgestaltung des Verfahrens wird, sofern eine Zwei-Phasen-Strömung bestimmt wird, wobei der Anteil der nicht-leitenden Phase bestimmt wird, der Volumendurchfluss der leitenden Phase unter Berücksichtigung der nicht-leitenden Phase bestimmt. Diese Ausgestaltung des Verfahrens weist den Vorteil auf, dass der Volumendurchfluss der leitenden Phase besonders genau bestimmt werden kann.

Gemäß einer zweiten Lehre der vorliegenden Erfindung wird die eingangs dargelegte Aufgabe durch ein eingangs beschriebenes Magnetisch-induktives Durchflussmessgerät, wobei das Magnetisch-induktive Durchflussmessgerät wenigstens ein Messrohr zum Führen eines strömenden Mediums, wenigstens eine Magnetfelderzeugungseinrichtung zum Erzeugen eines das Messrohr senkrecht zur Strömungsrichtung des Mediums durchsetzenden Magnetfeldes, wenigstens ein Elektrodenpaar zum Abgreifen einer in dem Medium im Messrohr induzierten elektrischen Spannung, und wenigstens eine Steuer-und Auswerteeinheit umfasst, dadurch gelöst, dass die Steuer- und Auswerteeinheit im Betrieb eines der zuvor beschriebenen Verfahren durchführt.

Im Hinblick auf die Vorteile der einzelnen Ausgestaltungen des Verfahrens wird auf die Ausführungen des jeweiligen Verfahrens verwiesen.

Damit weist das erfindungsgemäße Magnetisch-induktive Durchflussmessgerät den Vorteil auf, dass es eine zuverlässige Erkennung einer Zwei-Phasen-Strömung bei niedrigen und bei hohen Durchflussgeschwindigkeiten gewährleistet.

Es gibt nun eine Vielzahl von Möglichkeiten das erfindungsgemäße Verfahren und das erfindungsgemäße Durchflussmessgerät auszugestalten und weiterzubilden. Dazu wird verwiesen auf die den unabhängigen Patentansprüchen nachgeordneten Patentansprüche sowie auf die nachfolgen beschriebenen Ausführungsbeispiele in Kombination mit der Zeichnung.

In der Zeichnung zeigen
- Fig. 1: ein erstes Ausführungsbeispiel eines Verfahrens zum Betreiben eines Magnetisch-induktiven Durchflussmessgeräts,
- Fig.2: ein weiteres Ausführungsbeispiel eines Verfahrens zum Betreiben eines Magnetisch-induktiven Durchflussmessgeräts,
- Fig. 3: die Abhängigkeit der Hochpass-Varianz und der Tiefpass-Varianz von dem Anteil einer gasförmigen Phase in einer Zwei-Phasenströmung,
- Fig. 4: die Abhängigkeit der Hochpass-Varianz und der Tiefpass-Varianz von der Durchflussgeschwindigkeit des strömenden Mediums und
- Fig. 5: ein Ausführungsbeispiel eines erfindungsgemäßen Magnetisch-induktiven Durchflussmessgeräts.

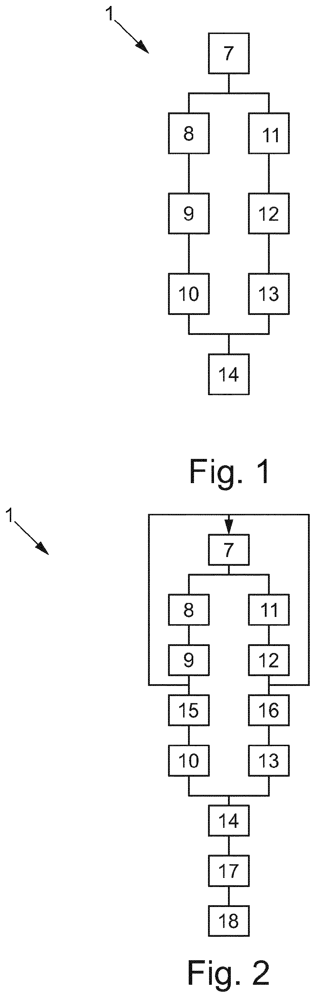

Fig. 1 zeigt ein Ausführungsbeispiel eines erfindungsgemäßen Verfahrens 1 zum Betreiben eines Magnetisch-induktiven Durchflussmessgeräts 2, wobei das Magnetisch-induktive Durchflussmessgerät 2 ein Messrohr 3 zum Führen eines strömenden Mediums, eine Magnetfelderzeugungseinrichtung 4 zum Erzeugen eines das Messrohr 3 senkrecht zur Strömungsrichtung des Mediums durchsetzenden Magnetfeldes, ein Elektrodenpaar 5 zum Abgreifen einer in dem Medium im Messrohr 3 induzierten elektrischen Spannung, und eine Steuer- und Auswerteeinheit 6 umfasst.

Im Detail betrifft das dargestellte Verfahren 1 die Bestimmung einer Zwei-Phasen-Strömung des strömenden Mediums.

Hierzu weist das dargestellte Verfahren 1 die folgenden Schritte auf:
In einem Aufzeichnungsschritt 7 zeichnet die Steuer- und Auswerteeinheit 6 das Elektrodensignal der Elektrodenspannung während einer Magnetfeldausrichtung als Messdaten auf.

Anschließend werden die Messdaten in einem ersten Filterschritt 8 durch einen Tiefpass gefiltert, sodass ein erstes tiefpassgefiltertes Auswertesignal vorliegt. Aus dem tiefpassgefilterten Auswertesignal wird ein erster Strömungsparameter bestimmt 9 und dieser erste Strömungsparameter wird mit einem, in der Steuer- und Auswerteeinheit 6 hinterlegten, ersten Grenzwert verglichen 10.

Zudem werden die Messdaten in einem zweiten Filterschritt 11 durch einen Hochpass gefiltert, sodass ein hochpassgefiltertes Auswertesignal vorliegt. Aus dem hochpassgefilterten Auswertesignal wird ein zweiter Strömungsparameter bestimmt 12 und dieser zweite Strömungsparameter wird mit einem, in der Steuer- und Auswerteeinheit 6 hinterlegten zweiten Grenzwert verglichen 13.

Im dargestellten Ausführungsbeispiel werden die Messdaten also im Wesentlichen zeitgleich auf zwei Analysewegen ausgewertet, wobei die Messdaten auf einem ersten Weg im Hinblick auf Änderungen bei hohen Frequenzen untersucht werden und wobei die Messdaten auf einem zweiten Weg im Hinblick auf Änderungen bei niedrigen Frequenzen untersucht werden.

Dabei werden das tiefpassgefilterte Auswertesignal und das hochpassgefilterte Auswertesignal separat derselben Auswertung unterzogen werden.

In einem nächsten Zuordnungsschritt 14 wird dem strömenden Medium eine Zwei-Phasen-Strömung zugeordnet, wenn der erste Strömungsparameter den ersten Grenzwert überschreitet und/oder wenn der zweite Strömungsparameter den zweiten Grenzwert überschreitet.

Das dargestellte Verfahren weist damit den Vorteil auf, dass das Vorliegen einer Zwei-Phasen-Strömung auf der Analyse der Messdaten in unterschiedlichen Frequenzbereichen beruht, sodass sowohl bei langsamen als auch bei schnellen Durchflussgeschwindigkeiten eine Zwei-Phasen-Strömung sich er detektiert werden kann.

In Fig. 2 ist ein weiteres Ausführungsbeispiel eines Verfahrens 1 zum Betreiben eines Magnetisch-induktiven Durchflussmessgeräts 2 dargestellt, wobei das Magnetisch-induktive Durchflussmessgerät 2 wie zu Fig. 1 beschrieben ausgestaltet ist.

In einem Aufzeichnungsschritt 7 zeichnet die Steuer- und Auswerteeinheit das Elektrodensignal der Elektrodenspannung während einer Magnetfeldausrichtung als Messdaten auf.

Anschließend werden die Messdaten in einem ersten Filterschritt 8 durch einen Tiefpass gefiltert, sodass ein erstes tiefpassgefiltertes Auswertesignal vorliegt, wobei als erster Strömungsparameter die Varianz des tiefpassgefilterten Auswertesignals bestimmt wird 9, sodass eine Tiefpass-Varianz vorliegt.

Zudem werden die Messdaten in einem zweiten Filterschritt 11 durch einen Hochpass gefiltert, sodass ein hochpassgefiltertes Auswertesignal vorliegt, wobei als zweiter Strömungsparameter die Varianz des hochpassgefilterten Auswertesignal bestimmt wird 12, sodass eine Hochpass-Varianz vorliegt.

Dieser Schritt wird für eine Mehrzahl von Magnetfeldausrichtungen wiederholt, sodass eine Vielzahl von Tiefpass-Varianzen und eine Vielzahl von Hochpass-Varianzen vorliegt. Die Vielzahl von Tiefpass-Varianzen wird zu einer gemittelten Tiefpass-Varianz gemittelt 15 und die Vielzahl von Hochpass-Varianzen wird zu einer gemittelten Hochpass-Varianz gemittelt 16.

Anschließend wird die gemittelte Tiefpass-Varianz mit einem in der Steuer-und Auswerteeinheit 6 hinterlegten Tiefpass-Varianz-Grenzwert verglichen 10 und die gemittelte Hochpass-Varianz wird einem in der Steuer- und Auswerteeinheit 6 hinterlegten Hochpass-Varianz-Grenzwert verglichen 13.

Überschreitet die gemittelte Tiefpass-Varianz den Tiefpass-Varianz-Grenzwert und/oder überschreitet die gemittelte Hochpass-Varianz den Hochpass-Varianz-Grenzwert, so wird in einem Zuordnungsschritt 14 dem zu untersuchenden Medium eine Zwei-Phasen-Strömung zugeordnet.

Gemäß dem dargestellten Ausführungsbeispiel ist in der Steuer- und Auswerteeinheit ein Zusammenhang zwischen der gemittelten Tiefpass-Varianz und der gemittelten Hochpass-Varianz und dem Anteil einer Gasphase in einer Zwei-Phasen-Strömung für unterschiedliche Durchflussgeschwindigkeiten hinterlegt.

Bei Kenntnis des Durchflusses wird gemäß einem nächsten Schritt 17 mittels der erfassten gemittelten Tiefpass-Varianz und/oder der erfassten gemittelten Hochpass-Varianz der Anteil der gasförmigen Phase bestimmt.

Basierend auf dem Anteil der gasförmigen Phase wird in einem nächsten Schritt der Volumendurchfluss der flüssigen Phase bestimmt 18.

Das dargestellte Verfahren weist insofern den Vorteil auf, dass die Bestimmung der flüssigen, leitenden Phase besonders genau erfolgen kann, da eine Zwei-Phasen-Strömung erkannt und der Einfluss der nicht-leitenden Phase bei der Bestimmung des Volumendurchflusses der flüssigen Phase berücksichtigt werden kann.

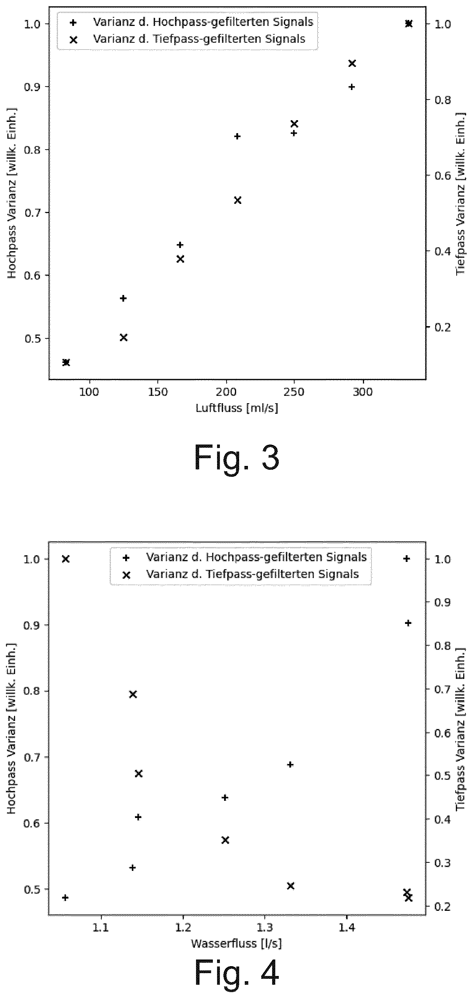

Fig. 3 zeigt die Abhängigkeit der Hochpass-Varianz und der Tiefpass-Varianz von dem Anteil der gasförmigen Phase eines Zwei-Phasen-Mediums bei konstanter Durchflussgeschwindigkeit. Dazu sind die Varianzen im dargestellten Ausführungsbeispiel normiert. Die Darstellung zeigt, dass sowohl die Hochpass-Varianz als auch die Tiefpass-Varianz sich mit zunehmendem Anteil der gasförmigen Phase erhöht. Dies gilt für einen Anteil der gasförmigen Gase von bis zu ca. 40 %. Ist ein solcher Zusammenhang in der Steuer-und Auswerteeinheit hinterlegt, so kann bei Kenntnis der Durchflussgeschwindigkeit basierend auf der bestimmten Tiefpass-Varianz und/oder der bestimmten Hochpass-Varianz der Anteil einer gasförmigen Phase einer Zwei-Phasen-Strömung bestimmt werden.

Fig. 4 zeigt den Verlauf der Hochpass-Varianz und den Verlauf der Tiefpass-Varianz für unterschiedliche Durchflussgeschwindigkeiten bei konstantem gasförmigen Anteil. Im dargestellten Ausführungsbeispiel sind die Varianzen normiert. Die Darstellung zeigt, dass die Hochpass-Varianz mit steigender Durchflussgeschwindigkeit zunimmt, während die Tiefpass-Varianz mit steigender Durchflussgeschwindigkeit abnimmt. Ein solcher Verlauf der Varianzen kann ebenfalls als Indikator für eine Zwei-Phasen-Strömung genutzt werden.

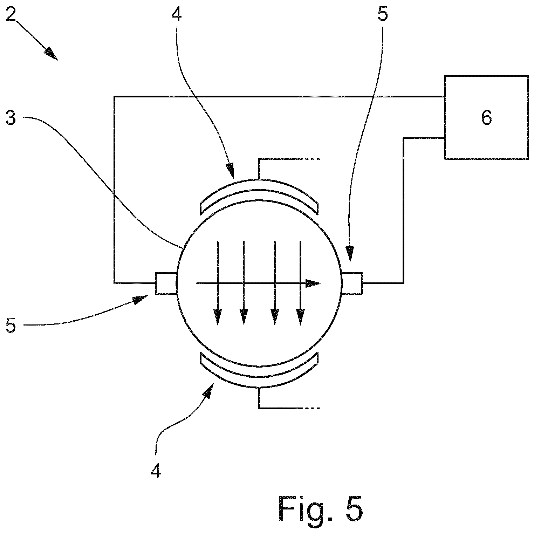

Fig. 5 zeigt ein Magnetisch-induktives Durchflussmessgerät 2mit einem Messrohr 3 zum Führen eines strömenden Mediums, einer Magnetfelderzeugungseinrichtung 4 zum Erzeugen eines das Messrohr 3 senkrecht zur Strömungsrichtung des Mediums durchsetzenden Magnetfeldes, einem Elektrodenpaar 5 zum Abgreifen einer in dem Medium im Messrohr 3 induzierten elektrischen Spannung und mit einer Steuer- und Auswerteeinheit 6.

Die Steuer- und Auswerteeinheit 6 ist derart ausgebildet, dass sie im Betrieb ein erfindungsgemäßes Verfahren 1 zur Erfassung einer Zwei-Phasen-Strömung durchführt.

### Bezugszeichen

- 1: Verfahren zum Betreiben eines Magnetisch-induktiven Durchflussmessgeräts
- 2: Magnetisch-induktives Durchflussmessgerät
- 3: Messrohr
- 4: Magnetfelderzeugungseinrichtung
- 5: Elektrodenpaar
- 6: Steuer- und Auswerteinheit
- 7: Aufzeichnungsschritt
- 8: erster Filterschritt
- 9: Bestimmung eines ersten Strömungsparameters
- 10: Vergleich des ersten Strömungsparameters mit einem ersten Grenzwert
- 11: zweiter Filterschritt
- 12: Bestimmung eines zweiten Strömungsparameters
- 13: Vergleich des zweiten Strömungsparameters mit einem zweiten Grenzwert
- 14: Zuordnungsschritt
- 15: Mittelung der Tiefpass-Varianzen
- 16: Mittelung der Hochpass-Varianzen
- 17: Bestimmung des Anteils der gasförmigen Phase
- 18: Bestimmung des Volumendurchflusses der flüssigen Phase

## Patentansprüche

1. Verfahren (1) zum Betreiben eines Magnetisch-induktiven Durchflussmessgeräts (2), wobei das Magnetisch-induktive Durchflussmessgerät (2) wenigstens ein Messrohr (3) zum Führen eines strömenden Mediums, wenigstens eine Magnetfelderzeugungseinrichtung (4) zum Erzeugen eines das Messrohr (3) senkrecht zur Strömungsrichtung des Mediums durchsetzenden Magnetfeldes, wenigstens ein Elektrodenpaar (5) zum Abgreifen einer in dem Medium im Messrohr (3) induzierten elektrischen Spannung, und wenigstens eine Steuer- und Auswerteeinheit (6) umfasst,
wobei das Verfahren weiter umfasst, dass in einem Aufzeichnungsschritt (7) die Steuer- und Auswerteeinheit das Elektrodensignal der Elektrodenspannung während einer Magnetfeldausrichtung als Messdaten aufzeichnet,
dass die Messdaten in einem ersten Filterschritt (8) durch einen Tiefpass gefiltert werden, sodass ein erstes tiefpassgefiltertes Auswertesignal vorliegt, wobei aus dem tiefpassgefilterten Auswertesignal ein erster Strömungsparameter bestimmt wird (9), der mit einem ersten, in der Steuer- und Auswerteeinheit hinterlegten, Grenzwert verglichen wird (10), und
dass die Messdaten in einem zweiten Filterschritt (11) durch einen Hochpass gefiltert werden, sodass ein hochpassgefiltertes Auswertesignal vorliegt, wobei aus dem hochpassgefilterten Auswertesignal ein zweiter Strömungsparameter bestimmt wird (12), der mit einem zweiten, in der Steuer- und Auswerteeinheit hinterlegten, Grenzwert verglichen wird (13),
so dass das tiefpassgefilterte Auswertesignal und das hochpassgefilterte Auswertesignal separat derselben Auswertung unterzogen werden, und
dass in einem Zuordnungsschritt (14) dem strömenden Medium eine Zwei-Phasen-Strömung zugeordnet wird, wenn der erste Strömungsparameter den ersten Grenzwert überschreitet und/oder wenn der zweite Strömungsparameter den zweiten Grenzwert überschreitet.

2. Verfahren (1) nach Anspruch 1, **dadurch gekennzeichnet, dass** als erster Strömungsparameter die Varianz des tiefpassgefilterten Auswertesignals bestimmt wird, sodass eine Tiefpass-Varianz vorliegt,
dass als zweiter Strömungsparameter die Varianz des hochpassgefilterten Auswertesignals bestimmt wird, sodass eine Hochpass-Varianz vorliegt,
dass in der Steuer- und Auswerteeinheit (6) ein Tiefpass-Varianz-Grenzwert und ein Hochpass-Varianz-Grenzwert hinterlegt sind,
dass die Tiefpass-Varianz mit dem Tiefpass-Varianz-Grenzwert verglichen wird und dass die Hochpass-Varianz mit dem Hochpass-Varianz-Grenzwert verglichen wird, und
dass eine Zwei-Phasen-Strömung detektiert wird, wenn die Tiefpass-Varianz den Tiefpass-Varianz-Grenzwert überschreitet und/oder wenn die Hochpass-Varianz den Hochpass-Varianz-Grenzwert überschreitet.

3. Verfahren (1) nach Anspruch 1 oder 2, **dadurch gekennzeichnet, dass** vor dem Vergleich mit dem ersten Grenzwert von dem tiefpassgefilterten Auswertesignal der Gleichanteil subtrahiert wird und
dass vor dem Vergleich mit dem zweiten Grenzwert von dem ersten hochpassgefilterten Auswertesignal der Gleichanteil subtrahiert wird.

4. Verfahren (1) nach einem der Ansprüche 1 bis 3, **dadurch gekennzeichnet, dass** während wenigstens einer weiteren Magnetfeldausrichtung wenigstens ein weiteres Elektrodensignal erfasst wird und dass aus dem wenigstens einen weiteren Elektrodensignal nach der Tiefpassfilterung wenigstens eine weiterer erster Strömungsparameter und dass aus dem aus dem wenigstens einen weiteren Elektrodensignal nach der Hochpassfilterung wenigstens ein weiterer zweiter Strömungsparameter bestimmt werden und
dass die ersten Strömungsparameter gemittelt werden (15), sodass ein gemittelter erster Strömungsparameter vorliegt,
dass die zweiten Strömungsparameter gemittelt werden (16), sodass ein gemittelter zweiter Strömungsparameter vorliegt und
dass zur Detektion einer Zwei-Phasen-Strömung der gemittelte erste Strömungsparameter mit dem ersten Grenzwert verglichen wird und der gemittelte zweite Strömungsparameter mit dem zweiten Grenzwert verglichen wird.

5. Verfahren (1) nach einem der Ansprüche 1 bis 4, **dadurch gekennzeichnet, dass** die Grenzfrequenz f_{tief} des Tiefpass-Filter zwischen 30 Hz und 500 Hz liegt, wobei die Grenzfrequenz f_{tief} vorzugsweise ca. 100 Hz beträgt.

6. Verfahren (1) nach einem der Ansprüche 1 bis 5, **dadurch gekennzeichnet, dass** die Grenzfrequenz f_{hoch} des Hochpass-Filters zwischen 500 Hz und 1200 Hz liegt, wobei die Grenzfrequenz f_{hoch} vorzugsweise ca. 1000 Hz beträgt.

7. Verfahren (1) nach einem der Ansprüche 1 bis 6, **dadurch gekennzeichnet, dass** der nicht-leitfähige Anteil des strömenden Mediums basierend auf dem ersten Strömungsparameter oder dem gemittelten ersten Strömungsparameter und/oder basierend auf dem zweiten Strömungsparameter oder dem gemittelten zweiten Strömungsparameter bestimmt wird (17).

8. Verfahren (1) nach einem der Ansprüche 1 bis 7, **dadurch gekennzeichnet, dass** in der Steuer- und Auswerteeinheit (6) eine Abhängigkeit des ersten Strömungsparameters und/oder des zweiten Strömungsparameters von der Durchflussgeschwindigkeit des Mediums hinterlegt ist und dass das Vorhandensein einer Zwei-Phasen-Strömung basierend auf dem Verlauf des ersten Strömungsparameters oder des gemittelten ersten Strömungsparameters bei verschiedenen Durchflussgeschwindigkeiten des strömenden Mediums und/oder basierend auf dem Verlauf des zweiten Strömungsparameters oder des gemittelten zweiten Strömungsparameters bei verschiedenen Durchflussgeschwindigkeiten des strömenden Mediums bestimmt wird.

9. Verfahren (1) nach einem der Ansprüche 1 bis 7, **dadurch gekennzeichnet, dass** sofern eine Zwei-Phasen-Strömung detektiert wird und weiterhin der Anteil der nicht-leitenden Phase bestimmt wird (17), der Volumendurchfluss der leitenden Phase unter Berücksichtigung der nicht-leitenden Phase bestimmt wird (18).

10. Magnetisch-Induktives-Durchflussmessgerät (2), wobei das Magnetisch-induktive Durchflussmessgerät (2) wenigstens ein Messrohr zum Führen (3) eines strömenden Mediums, wenigstens eine Magnetfelderzeugungseinrichtung (4) zum Erzeugen eines das Messrohr (3) senkrecht zur Strömungsrichtung des Mediums durchsetzenden Magnetfeldes, wenigstens ein Elektrodenpaar (5) zum Abgreifen einer in dem Medium im Messrohr (3) induzierten elektrischen Spannung, und wenigstens eine Steuer- und Auswerteeinheit (6) umfasst,
**dadurch gekennzeichnet,**
**dass** die Steuer- und Auswerteeinheit (6) im Betrieb ein Verfahren (1) nach einem der Ansprüche 1 bis 9 durchführt.

## Claims

1. Method (1) for operating a magnetic-inductive flowmeter (2), wherein the magnetic-inductive flowmeter (2) comprises at least one measuring tube (3) for guiding a flowing medium, at least one magnetic field generating device (4) for generating a magnetic field passing through the measuring tube (3) perpendicular to the direction of flow of the medium, at least one pair of electrodes (5) for tapping an electrical voltage induced in the medium in the measuring tube (3), and at least one control and evaluation unit (6),
wherein the method further includes
that, in a recording step (7), the control and evaluation unit records the electrode signal of the electrode voltage during a magnetic field alignment as measurement data,
that the measurement data is filtered by a low-pass filter in a first filter step (8), so that a first low-pass filtered evaluation signal is present, wherein a first flow parameter is determined (9) from the low-pass filtered evaluation signal, which is compared (10) with a first limit value stored in the control and evaluation unit, and
that the measurement data is filtered by a high-pass filter in a second filtering step (11), so that a high-pass filtered evaluation signal is present, wherein a second flow parameter is determined (12) from the high-pass filtered evaluation signal, which is compared (13) with a second limit value stored in the control and evaluation unit,
so that the low-pass-filtered evaluation signal and the high-pass-filtered evaluation signal are subjected separately to the same evaluation, and
that a two-phase flow is assigned to the flowing medium in an assignment step (14) if the first flow parameter exceeds the first limit value and/or if the second flow parameter exceeds the second limit value.

2. Method (1) according to claim 1, **characterized in that** the variance of the low-pass filtered evaluation signal is determined as the first flow parameter, so that a low-pass variance is present,
that the variance of the high-pass filtered evaluation signal is determined as the second flow parameter, so that a high-pass variance is present,
that a low-pass variance limit value and a high-pass variance limit value are stored in the control and evaluation unit (6),
that the low-pass variance is compared with the low-pass variance limit value and that the high-pass variance is compared with the high-pass variance limit value, and
that a two-phase flow is detected when the low-pass variance exceeds the low-pass variance limit value and/or when the high-pass variance exceeds the high-pass variance limit value.

3. Method (1) according to claim 1 or 2, **characterized in that** the constant component is subtracted from the low-pass filtered evaluation signal before the comparison with the first limit value and
that the constant component is subtracted from the first high-pass-filtered evaluation signal before the comparison with the second limit value.

4. Method (1) according to any one of claims 1 to 3, **characterized in that** at least one further electrode signal is captured during at least one further magnetic field alignment, and that at least one further first flow parameter is determined from the at least one further electrode signal after the low-pass filtering, and that at least one further second flow parameter is determined from the at least one further electrode signal after the high-pass filtering, and
that the first flow parameters are averaged (15), so that an averaged first flow parameter is present,
that the second flow parameters are averaged (16) so that an averaged second flow parameter is present, and
that the averaged first flow parameter is compared with the first limit value and the averaged second flow parameter is compared with the second limit value to detect a two-phase flow.

5. Method (1) according to any one of claims 1 to 4, **characterized in that** the cut-off frequency f_{low} of the low-pass filter is between 30 Hz and 500 Hz, wherein the cut-off frequency f_{low} is preferably approximately 100 Hz.

6. Method (1) according to any one of claims 1 to 5, **characterized in that** the cut-off frequency f_{high} of the high-pass filter is between 500 Hz and 1200 Hz, wherein the cut-off frequency f_{high} is preferably about 1000 Hz.

7. Method (1) according to any one of claims 1 to 6, **characterized in that** the non-conductive portion of the flowing medium is determined (17) based on the first flow parameter or the averaged first flow parameter and/or based on the second flow parameter or the averaged second flow parameter.

8. Method (1) according to any one of claims 1 to 7, **characterized in in that** a dependence of the first flow parameter and/or the second flow parameter on the flow velocity of the medium is stored in the control and evaluation unit (6), and that the presence of a two-phase flow is determined based on the course of the first flow parameter or the averaged first flow parameter at different flow velocities of the flowing medium and/or based on the course of the second flow parameter or the averaged second flow parameter at different flow velocities of the flowing medium.

9. Method (1) according to any one of claims 1 to 7, **characterized in that**, if a two-phase flow is detected and furthermore the proportion of the non-conductive phase is determined (17), the volume flow rate of the conductive phase is determined (18) taking into account the non-conductive phase.

10. Magnetic-inductive flowmeter (2), wherein the magnetic-inductive flowmeter (2) comprises at least one measuring tube for guiding (3) a flowing medium, at least one magnetic field generating device (4) for generating a magnetic field passing through the measuring tube (3) perpendicular to the direction of flow of the medium, at least one pair of electrodes (5) for tapping an electrical voltage induced in the medium in the measuring tube (3), and at least one control and evaluation unit (6),
**characterized in**
**that** the control and evaluation unit (6) performs a method (1) according to any one of claims 1 to 9 during operation.

## Revendications

1. Procédé (1) de fonctionnement d'un débitmètre à induction magnétique (2), le débitmètre à induction magnétique (2) comprenant au moins un tube de mesure (3) pour guider un milieu en écoulement, au moins un dispositif de génération de champ magnétique (4) pour générer un champ magnétique traversant le tube de mesure (3) perpendiculairement à la direction de l'écoulement du milieu, au moins une paire d'électrodes (5) pour capter une tension électrique induite dans le milieu à l'intérieur du tube de mesure (3), et au moins une unité de commande et d'évaluation (6),
le procédé comprenant en outre
lors d'une étape d'enregistrement (7), l'enregistrement par l'unité de commande et d'évaluation du signal d'électrode donnant la tension d'électrode en tant que données de mesure pendant une orientation de champ,
le filtrage des données de mesure par un filtre passe-bas lors d'une première étape de filtrage (8), de telle sorte qu'un premier signal d'évaluation filtré par filtrage passe-bas soit disponible, un premier paramètre d'écoulement étant déterminé à partir du signal d'évaluation filtré par filtrage passe-bas (9), lequel est comparé à une première valeur limite (10) stockée dans l'unité de commande et d'évaluation, et
le filtrage des données de mesure par un filtre passe-haut lors d'une deuxième étape de filtrage (11), de telle sorte qu'un signal d'évaluation filtré par filtrage passe-haut soit disponible, un deuxième paramètre d'écoulement étant déterminé à partir du signal d'évaluation filtré par filtrage passe-haut (12), lequel est comparé à une deuxième valeur limite (13) stockée dans l'unité de commande et d'évaluation,
de telle sorte que le signal d'évaluation filtré par filtrage passe-bas et le signal d'évaluation filtré par filtrage passe-haut soient soumis séparément à la même évaluation, et
lors d'une étape d'association (14), l'association d'un écoulement diphasique au milieu en écoulement lorsque le premier paramètre d'écoulement dépasse la première valeur limite et/ou lorsque le deuxième paramètre d'écoulement dépasse la deuxième valeur limite.

2. Procédé (1) selon la revendication 1, **caractérisé en ce que** la variance du signal d'évaluation filtré par filtrage passe-bas est déterminée en tant que premier paramètre d'écoulement, de telle sorte qu'une variance passe-bas soit disponible,
**en ce que** la variance du signal d'évaluation filtré par filtrage passe-haut est déterminée en tant que deuxième paramètre d'écoulement, de telle sorte qu'une variance passe-haut soit disponible,
**en ce qu'**une valeur limite de la variance passe-bas et une valeur limite de la variance passe-haut sont stockées dans l'unité de commande et d'évaluation (6),
**en ce que** la variance passe-bas est comparée à la valeur limite de la variance passe-bas et la variance passe-haut est comparée à la valeur limite de la variance passe-haut, et
**en ce qu'**un écoulement diphasique est détecté lorsque la variance passe-bas dépasse la valeur limite de la variance passe-bas et/ou lorsque la variance passe-haut dépasse la valeur limite de la variance passe-haut.

3. Procédé (1) selon la revendication 1 ou 2, **caractérisé en ce qu'**avant la comparaison avec la première valeur limite, la composante continue est soustraite au signal d'évaluation filtré par filtrage passe-bas, et
**en ce qu'**avant la comparaison avec la deuxième valeur limite, la composante continue est soustraite au premier signal d'évaluation filtré par filtrage passe-haut.

4. Procédé (1) selon l'une quelconque des revendications 1 à 3, **caractérisé en ce qu'**au cours d'au moins une autre orientation de champ magnétique, au moins un autre signal d'électrode est acquis et **en ce qu'**à partir dudit au moins un autre signal d'électrode après le filtrage passe-bas, au moins un autre premier paramètre d'écoulement est déterminé, et **en ce qu'**à partir dudit au moins un autre signal d'électrode après le filtrage passe-haut, au moins un autre deuxième paramètre d'écoulement est déterminé, et
**en ce que** les premiers paramètres d'écoulement sont moyennés (15), de telle sorte qu'un premier paramètre d'écoulement moyenné soit disponible,
**en ce que** les deuxièmes paramètres d'écoulement sont moyennés (16), de telle sorte qu'un deuxième paramètre d'écoulement moyenné soit disponible, et
**en ce que**, pour la détection d'un écoulement diphasique, le premier paramètre d'écoulement moyenné est comparé à la première valeur limite et le deuxième paramètre d'écoulement moyenné est comparé à la deuxième valeur limite.

5. Procédé (1) selon l'une quelconque des revendications 1 à 4, **caractérisé en ce que** la fréquence de coupure f_{tief} du filtre passe-bas est comprise entre 30 Hz et 500 Hz, la fréquence de coupure f_{tief} étant de préférence d'environ 100 Hz.

6. Procédé (1) selon l'une quelconque des revendications 1 à 5, **caractérisé en ce que** la fréquence de coupure f_{hoch} du filtre passe-haut est comprise entre 500 Hz et 1200 Hz, la fréquence de coupure f_{hoch} étant de préférence d'environ 1000 Hz.

7. Procédé (1) selon l'une quelconque des revendications 1 à 6, **caractérisé en ce que** la proportion non conductrice du milieu en écoulement est déterminée sur la base du premier paramètre d'écoulement ou du premier paramètre d'écoulement moyenné et/ou sur la base du deuxième paramètre d'écoulement ou du deuxième paramètre d'écoulement moyenné (17).

8. Procédé (1) selon l'une quelconque des revendications 1 à 7, **caractérisé en ce que**, dans l'unité de commande et d'évaluation (6), une dépendance du premier paramètre d'écoulement et/ou du deuxième paramètre d'écoulement vis-à-vis de la vitesse d'écoulement du milieu est stockée, et **en ce que** la présence d'un écoulement diphasique est déterminée sur la base de l'évolution du premier paramètre d'écoulement ou du premier paramètre d'écoulement moyenné à différentes vitesses d'écoulement du milieu en écoulement et/ou sur la base de l'évolution du deuxième paramètre d'écoulement ou du deuxième paramètre d'écoulement moyenné à différentes vitesses d'écoulement du milieu en écoulement.

9. Procédé (1) selon l'une quelconque des revendications 1 à 7, **caractérisé en ce que** si un écoulement diphasique est détecté et si, en outre, la proportion de la phase non conductrice est déterminée (17), le débit volumique de la phase conductrice est déterminé en tenant compte de la phase non conductrice (18).

10. Débitmètre à induction magnétique (2), le débitmètre à induction magnétique (2) comprenant au moins un tube de mesure (3) pour guider un milieu en écoulement, au moins un dispositif de génération de champ magnétique (4) pour générer un champ magnétique traversant le tube de mesure (3) perpendiculairement à la direction de l'écoulement du milieu, au moins une paire d'électrodes (5) pour capter une tension électrique induite dans le milieu à l'intérieur du tube de mesure (3), et au moins une unité de commande et d'évaluation (6),
**caractérisé en ce que**
l'unité de commande et d'évaluation (6), en fonctionnement, met en œuvre un procédé (1) selon l'une quelconque des revendications 1 à 9.
